# EUROPEAN PATENT APPLICATION

(11) **EP 4 847 808 A1**
(43) Date of publication of application: **02.12.2026**
(21) Application number: 24919266.7
(22) Date of filing: 24.01.2024
(51) Int. Cl.: F16K 11/074

(54) **MULTIPORT VALVE AND THERMAL MANAGEMENT SYSTEM**

(71) Applicant: Johnson Electric International AG, 3280 Murten (CH)
(72) Inventor: CHEN, Anbang, Shenzhen, Guangdong 518125 (CN); QU, Tao, Shenzhen, Guangdong 518125 (CN); LIU, Xiaoyu, Shenzhen, Guangdong 518125 (CN)
(74) Representative: Doherty, William
(86) International application number: PCT/CN2024/073822
(87) International publication number: WO 2025/156150

(57) **Abstract**

The application discloses a multi-port valve and a thermal management system. The multi-port valve includes a valve housing and a valve core rotatably received in the valve housing; the valve housing includes a first input port and a second input port for external fluid flowing into the multi-port valve, and a first output port for the fluid flowing out of the multi-port valve; the valve core defines a plurality of flow passages in fluid isolation from one another inside the valve core; the first output port are selectively in communication only with one of the first input port and the second input port, or simultaneously in communication with both the first input port and the second input port in response to different operating modes of the multi-port valve by rotating the valve core to different positions relative to the valve housing.

## Description

### FIELD OF THE INVENTION

This application relates to the technical field of valves, and in particular to a multi-port valve and a thermal management system.

### BACKGROUND

A valve is a control component in a fluid conveying system and may be used to control the on/off state, flow direction, and the like of a fluid. For example, in a thermal management system of a new energy vehicle, valves are usually required to control the flow of coolant. As is well known, an automotive thermal management system generally has many thermal management objects, such as a battery and a passenger compartment. Existing automotive thermal management systems often use multiple valves to cool various thermal management objects as needed. Such automotive thermal management systems have complex structures and high costs.

### SUMMARY OF THE INVENTION

In view of this, the present disclosure aims to provide a multi-port valve and a thermal management system, so that one multi-port valve of the present invention can operate in four operating modes between two input ports and two output ports, thereby effectively simplifying the structure of the thermal management system and reducing the cost of the thermal management system.

In one aspect, the present disclosure provides a multi-port valve including a valve housing and a valve core rotatably received in the valve housing; the valve housing includes a first valve housing port, a second valve housing port and a third valve housing port, the second valve housing port and the third valve housing port respectively serves as a first input port and a second input port for external fluid flowing into the multi-port valve, the first valve housing port serves as a first output port for the fluid flowing out of the multi-port valve; the valve core defines a plurality of flow passages, the flow passages are in fluid isolation from one another inside the valve core; the first output port are selectively in communication only with one of the first input port and the second input port, or simultaneously in communication with both the first input port and the second input port in response to different operating modes of the multi-port valve by rotating the valve core to different positions relative to the valve housing.

Preferably, the valve housing further includes a fourth valve housing port serving as a second output port for the fluid flowing out of the multi-port valve; the plurality of operating modes include a first operating mode, a second operating mode, a third operating mode and a fourth operating mode; in the first operating mode, the first input port and the second input port are both in communication with the first output port through one or more of the corresponding flow passages, but fluid is blocked from flowing through the second output port; in the second operating mode, the first input port is in communication with the second output port through one of the flow passages, and the second input port is in communication with the first output port through another one of the corresponding flow passages; in the third operating mode, the first input port and the second input port are both in communication with the second output port through one or more of the flow passages, but fluid is blocked from flowing through the first output port; and in the fourth operating mode, the first input port is in communication with the first output port through one of the corresponding flow passages, and the second input port is in communication with the second output port through another one of the corresponding flow passages.

Preferably, the valve housing further includes a fifth valve housing port, a sixth valve housing port, a seventh valve housing port and an eighth valve housing port; in the first operating mode, the fifth valve housing port is in communication with the sixth valve housing port, the seventh valve housing port and the eighth valve housing port, through one or more of the flow passages; in the second operating mode, the fifth valve housing port is in communication with the seventh valve housing port through one of the flow passages, and the sixth valve housing port is in communication with the eighth valve housing port through another one of the flow passages; in the third operating mode, the fluid is blocked from flowing through the fifth valve housing port, the sixth valve housing port and the seventh valve housing port are both in communication with the eighth valve housing port through one or more of the flow passages; and in the fourth operating mode, the fifth valve housing port is in communication with the sixth valve housing port through one of the flow passages, the seventh valve housing port is in communication with the eighth valve housing port through another one of the flow passage.

Preferably, the valve housing ports are defined in an axial end face of the valve housing and are distributed at intervals in a circumferential direction; each of the valve housing ports is substantially sector-annular in shape; span angles of the second valve housing port, the third valve housing port, the sixth valve housing port and the seventh valve housing port are equal; each of span angles of the first valve housing port, the fourth valve housing port, the fifth valve housing port and the eighth valve housing port is an integral multiple of the span angle of the second valve housing port.

Preferably, each of the flow passages includes one of multiple core cavities and one of multiple valve core ports communicating with said one core cavity; the valve core ports are defined in an axial end face of the valve core and are distributed at intervals in the circumferential direction, each of the valve core ports is substantially sector-annular in shape; the valve core ports can be alternatively aligned with and communicate with the valve core ports by switching among the operating modes to enable the flow passages to be selectively in communication with the valve housing ports; each of span angles of the valve core port is an integral multiple of the span angle of the second valve housing port.

Preferably, two of the valve core ports circumferentially adjacent to each other respectively belong to two of the flow passages; in at least one of the operating modes, a valve core port with the span angle greater than the span angle of the second valve housing port are simultaneously aligned with and in communication with two of the valve housing ports.

Preferably, one of the core cavities of one of the flow passages overlaps, in the axial direction, with the core cavities of one or more other flow passages.

Preferably, the valve core includes a valve core body, and a top plate and a bottom plate respectively covering two axial ends of the valve core body; the valve core ports are defined in the top plate, the core cavities of the flow passages are formed in the valve core body; the core cavities include upper cavities closed to an axial top side of the valve core bod, and lower cavities closed to an axial bottom side of the valve core body; the lower cavities overlap, in the axial direction, with one or more of the upper cavities.

In another aspect, the present disclosure further provides the thermal management system comprises the multi-port valve above.

Preferably, the thermal management system further includes two heat exchangers and two thermal management objects; the two heat exchangers are respectively in communication with the first input port and the second input port, and the two thermal management objects are respectively in communication with the first output port and the second output port.

Preferably, the two thermal management objects includes a battery and a passenger compartment.

### BRIEF DESCRIPTION OF THE DRAWINGS

Fig. 1 is a perspective schematic view of a multi-port valve according to an embodiment of the present invention.
Fig. 2 is an exploded view of the multi-port valve shown in Fig. 1.
Fig. 3 is a perspective schematic view of an upper housing portion of the multi-port valve shown in Fig. 2.
Fig. 4 is a rear view of the upper housing portion shown in Fig. 3.
Fig. 5 is an exploded view of a valve core of the multi-port valve shown in Fig. 2.
Fig. 6 is another exploded view of the valve core of the multi-port valve shown in Fig. 2.
Fig. 7 is a top view of the valve core of the multi-port valve shown in Fig. 2.
Fig. 8A is an exploded view of the multi-port valve shown in Fig. 1 in the first operating mode.
Fig. 8B is a top view of the multi-port valve shown in Fig. 1 in the first operating mode.
Fig. 9A is an exploded view of the multi-port valve shown in Fig. 1 in the second operating mode.
Fig. 9B is a top view of the multi-port valve shown in Fig. 1 in the second operating mode.
Fig. 10A is an exploded view of the multi-port valve shown in Fig. 1 in the third operating mode.
Fig. 10B is a top view of the multi-port valve shown in Fig. 1 in the third operating mode.
Fig. 11A is an exploded view of the multi-port valve shown in Fig. 1 in the fourth operating mode.
Fig. 11B is a top view of the multi-port valve shown in Fig. 1 in the fourth operating mode.
Fig. 12 is a simplified schematic view of a thermal management system according to an embodiment of the present invention.

### DETAILED DESCRIPTION OF THE PREFERRED EMBODIMENTS

The technical solution and beneficial effects of the present invention will be described in detail below with reference to the drawings and specific embodiments, so that they may be more clearly understood. It should be understood that the drawings are provided only for reference and explanation and are not intended to limit the present invention. The dimensions shown in the drawings are merely for facilitating clear description and do not limit proportional relationships.

In the description of the present invention, it should be understood that terms such as "center," "longitudinal," "transverse," "upper," "lower," "front," "rear," "left," "right," "vertical," "horizontal," "top," "bottom," "inner," "outer," "axial," "radial," and "circumferential" indicate orientations or positional relationships based on those shown in the drawings, and are used only for facilitating and simplifying the description of the present invention. They do not indicate or imply that the device or element referred to must have a specific orientation or must be constructed and operated in a specific orientation and therefore should not be construed as limiting the invention. In addition, the term "plurality" herein includes two, three, or more.

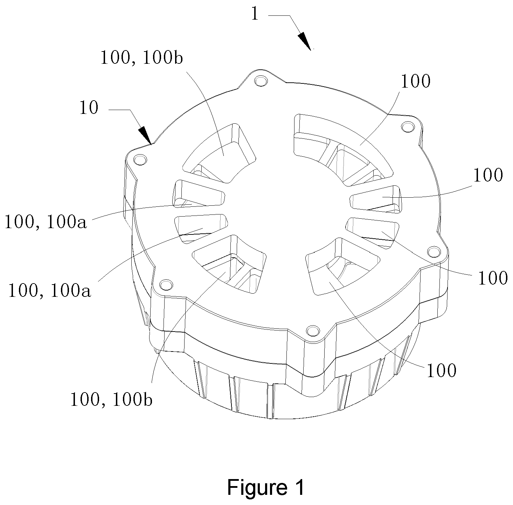

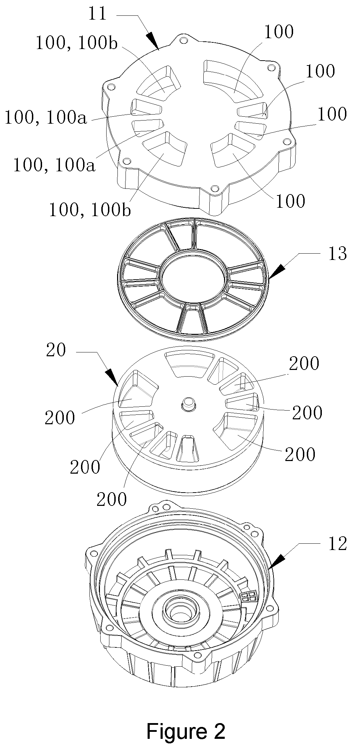

Referring to Fig. 1 and Fig. 2, a multi-port valve 1 according to an embodiment of the present invention includes a valve housing 10 and a valve core 20 rotatably received in the valve housing 10. The valve housing 10 includes a plurality of valve housing ports 100. The plurality of valve housing ports 100 includes two input ports 100a for allowing external fluid to flow into the multi-port valve 1, and at least one output port 100b for allowing fluid to flow out of the multi-port valve 1. The valve core 20 includes a plurality of flow passages 200. Each flow passage 200 penetrates the outer surface of the valve core 20 to form respective valve core ports. These flow passages 200 are not in communication with one another inside the valve core 20. According to different positions to which the valve core 20 rotates relative to the valve housing 10, the multi-port valve 1 includes a plurality of operating modes. In response to different operating modes are selected, the output port 100b may be in communication only with one of the two input ports 100a, respectively, or the output port 100b may be simultaneously in communication with both of the two input ports 100a.

Preferably, said at least one output port 100b includes two output ports 100b. In each operating mode, each input port 100a is in communication with a corresponding output port 100b through a corresponding flow passage 200. Thus, not only can four operating modes be realized between two input ports 100a, which may be connected to two heat exchangers, and two output ports 100b, which may be connected to two thermal management objects, by means of one multi-port valve 1, thereby simplifying the structure of a thermal management system and reducing the cost of the thermal management system, but also, in each operating mode, each input port 100a is in communication with a corresponding output port 100b through a corresponding flow passage 200. That is, the input ports 100a operate in each operating mode, thereby effectively improving the utilization rate of the heat exchangers and the cooling/heating efficiency for the thermal management objects.

By way of example only, in this embodiment, the valve housing 10 includes an upper housing portion 11 and a lower housing portion 12 designed as separate parts. The valve housing ports 100 are arranged at the upper housing portion 11, and the upper housing portion 11 and the lower housing portion 12 are fixedly connected, for example, by screws. The upper housing portion 11 and the lower housing portion 12 jointly enclose a cavity for receiving the valve core 20. Preferably, a sealing gasket 13 is arranged between the upper housing portion 11 and the valve core 20 to improve the dynamic sealing effect between the valve core 20 and the upper housing portion 11.

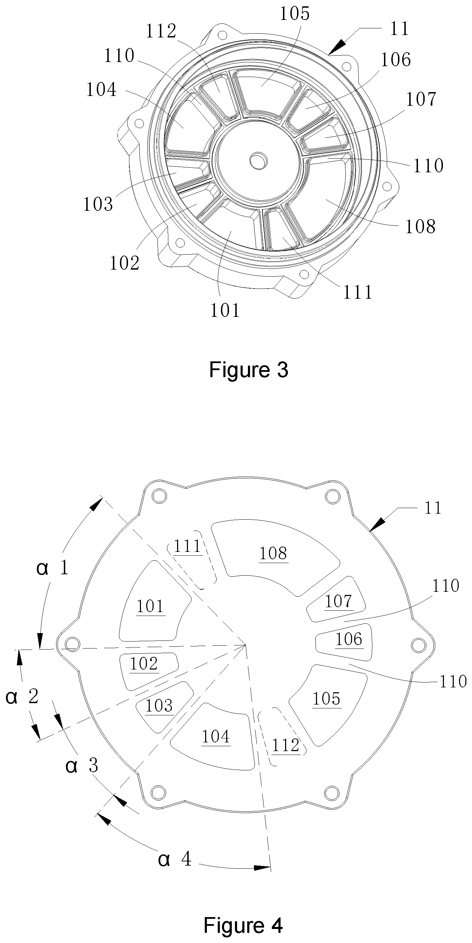

As shown in Fig. 3 and Fig. 4, in this embodiment, eight valve housing ports 100 are defined in an axial end face of the upper housing portion 11 and are distributed sequentially at intervals in the circumferential direction: a first valve housing port 101, which serves as one of the aforementioned output ports 100b; a second valve housing port 102, which serves as one of the aforementioned input ports 100a; a third valve housing port 103, which serves as the other input port 100a; a fourth valve housing port 104, which serves as the other output port 100b; a fifth valve housing port 105; a sixth valve housing port 106; a seventh valve housing port 107; and an eighth valve housing port 108. Each valve housing port 100 penetrates the upper housing portion 11 in the axial direction and is separated by a plurality of valve housing partition plates 110. In this embodiment, each of the valve housing ports 100 is substantially sector-annular in shape.

Further, the upper housing portion 11 is also provided with a first blocking region 111 and a second blocking region 112 opposite to each other. The first blocking region 111 is located between the first valve housing port 101 and the eighth valve housing port 108, and the second blocking region 112 is located between the fourth valve housing port 104 and the fifth valve housing port 105. The first to fourth valve housing ports 101-104 are distributed on one side of the first blocking region 111 and the second blocking region 112, and the fifth to eighth valve housing ports 105-108 are distributed on the other side of the first blocking region 111 and the second blocking region 112. As shown in the figures, the second blocking region 112 is offset slightly relative to the first blocking region 111 toward the side on which the first to fourth valve housing ports 101-104 are located.

Preferably, a span angle α₁ of the first valve housing port 101 is equal to a span angle α₄ of the fourth valve housing port 104. In other words, the span angles of the two output ports 100b in this embodiment are equal. A span angle α₂ of the second valve housing port 102 is equal to a span angle α₃ of the third valve housing port 103. In other words, the span angles of the two input ports 100a in this embodiment are equal. More preferably, the span angle α₁ of the first valve housing port 101 is twice the span angle α₂ of the second valve housing port 102. In other words. the span angles of the output ports 100b are twice the span angles of the input ports 100a. It should be noted that the span angle of each valve housing port 100 in this embodiment refers to an angle formed between axial center lines of the two plates 110 bounding the valve housing port 100.

Optionally, a span angle of the fifth valve housing port 105 is equal to a span angle of the first valve housing port 101. A span angle of the sixth valve housing port 106 and a span angle of the seventh valve housing port 107 are both equal to the span angle α₂ of the second valve housing port 102. A span angle of the eighth valve housing port 108 is three times the span angle α₂ of the second valve housing port 102. A span angle of the first blocking region 111 and A span angle of the second blocking region 112 are both equal to the span angle α₂ of the second valve housing port 102.

It may be understood that, in other embodiments, the number of the valve housing ports 100 and the span angles of the valve housing ports 100 may vary.

Referring also to Fig. 2, Fig. 5 and Fig. 6, in this embodiment, the valve core 20 includes a valve core body 21, and a top plate 22 and a bottom plate 23 respectively covering two axial ends of the valve core body 21. A rotating shaft 24 is integrally formed at the center of the bottom plate 23 and extending through the valve core body 21 and the top plate 22 to be rotatably connected to the upper housing portion 11. The valve core body 21 defines multiple core cavities 230. The top plate 22 defines multiple valve core port 210. Each of the flow passages 200 is formed with one of the core cavities 230 and at least one of the valve core ports 210 and communicating with said one of the core cavities 230. The valve core ports 210 can communicate with the valve housing ports 100 to enable the flow passages 200 to be in communication with the valve housing ports 100, correspondingly. The valve core ports 210 may be alternatively aligned with and communicate with different the valve core ports 210 by switching among deferent operating modes. It may be understood that, in other embodiments, the valve core 20 may also be integrally formed, that is, the valve core ports 210 and core cavities 230 of the flow passages 200 may be provided on the integral-formed valve core 20.

In this embodiment, ten valve core ports 210 are formed in the top plate 22 and are sequentially arranged at intervals in the circumferential direction, that are: a first valve core port 211, a second valve core port 212, a third valve core port 213, a fourth valve core port 214, a fifth valve core port 215, a sixth valve core port 216, a seventh valve core port 217, an eighth valve core port 218, a ninth valve core port 219 and a tenth valve core port 220. The core ports 210 are separated by a plurality of spokes 222. Each of the valve core ports 210 is substantially sector-annular in shape. Two of the valve core ports 210 circumferentially adjacent to each other respectively belong to two of the flow passages.

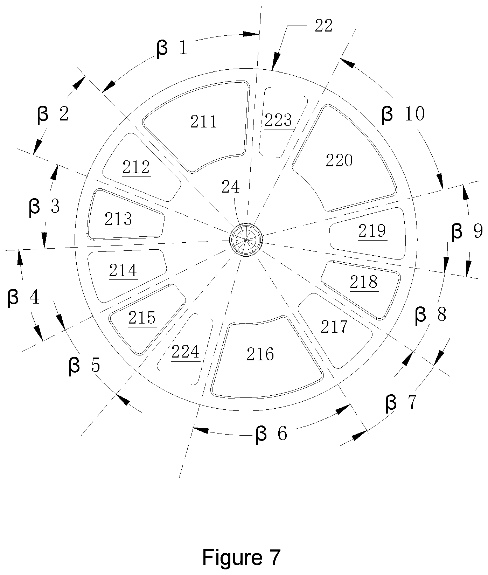

Further, the top plate 22 is also provided with a third blocking region 223 and a fourth blocking region 224 opposite to each other. The third blocking region 223 is located between the first valve core port 211 and the tenth valve core port 220, and the fourth blocking region 224 is located between the fifth valve core port 215 and the sixth valve core port 216. The first to fifth valve core ports 211-215 are distributed on one side of the third blocking region 223 and the fourth blocking region 224. The sixth to tenth valve core ports 216-220 are distributed on the other side of the third blocking region 223 and the fourth blocking region 224. However, as shown in Fig. 7, the fourth blocking region 224 is offset relative to the third blocking region 223 toward the side on which the first to fifth valve core ports 211-215 are located.

Preferably, span angles βᵢ of valve core ports 210 are an integral multiple of the span angle α₂ of the second valve housing port 102, where i = 1, 2, 3 ... 10. Since the second valve housing port 102 serves as the input port 100a. Each of the span angle βi of the valve core ports 210 is an integral multiple of the span angle of the input port 100a. It should be noted that the span angle of each of valve core ports 210 in this embodiment refers to an angle formed between center lines of two of the ribs 222 bounding the corresponding valve core port 210.

More preferably, a span angle β₁ of the first valve core port 211, a span angle β₆ of the sixth valve core port 216, and a span angle β₁₀ of the tenth valve core port 220 are equal to each other, and twice the span angle α₂ of the second valve housing port 102 (that is, twice the span angle of the input port 100a). In at least one of the operating modes, the first valve core port 211 may be simultaneously aligned with and in communication with two different valve housing ports 100. The same applies to the sixth valve core port 216 and the tenth valve core port 220.

Also preferably, a span angle β₂ of the second valve core port 212, a span angle β₃ of the third valve core port 213, a span angle β₄ of the fourth valve core port 214, a span angle β₅ of the fifth valve core port 215, a span angle β₇ of the seventh valve core port 217, a span angle β₈ of the eighth valve core port 218, and a span angle β₉ of the ninth valve core port 219 are equal to each other, and equal to the span angle α₂ of the second valve housing port 102 (that is, equal to the span angle of the input port 100a).

Optionally, a span angle of the third blocking region 223 and a span angle of the fourth blocking region 224 are both equal to the span angle α₂ of the second valve housing port 102.

It may be understood that, in other embodiments, the number of valve core ports 210 defined in the top plate 22 and the span angles of the valve core ports 210 may vary.

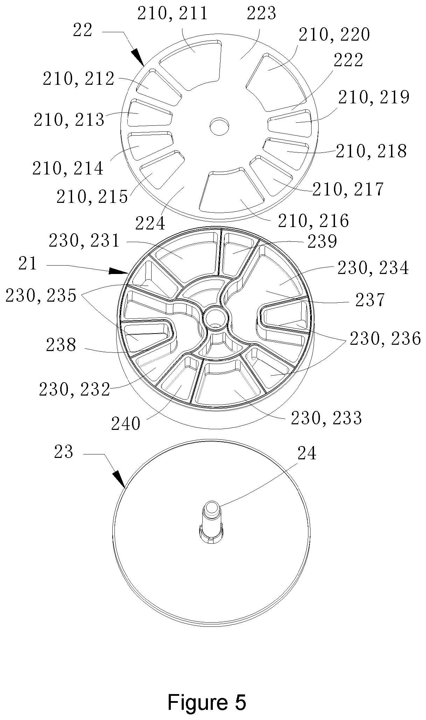

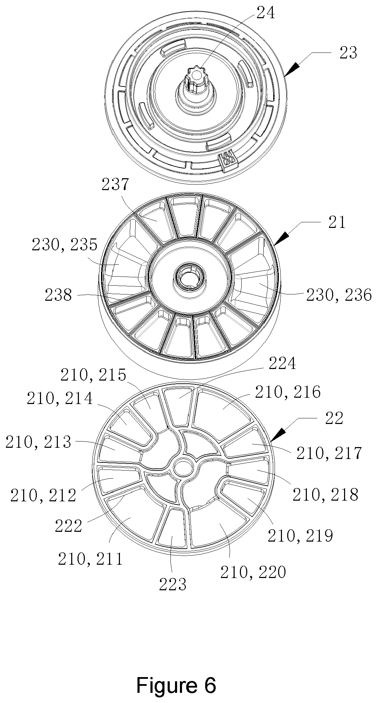

Referring again to Fig. 5 and Fig. 6, preferably, one of the core cavities 230 of one of the flow passages 200 overlaps, in the axial direction, with the core cavities 230 of one or more other flow passages 200. In this embodiment, the core cavities 230 include some upper cavities closed to an axial top side of the valve core body 21, and some lower cavities closed to an axial bottom side of the valve core body 21. So, the lower cavities overlap, in the axial direction, with one or more of the upper cavities. Specifically, the axial top side of the valve core body 21 are provided with a first upper cavity 231, a second upper cavity 232, a third upper cavity 233 and a fourth upper cavity 234 arranged sequentially in the circumferential direction. The axial bottom side of the valve core body 21 is provided with a first lower cavity 235 and a second lower cavity 236. The first-fourth upper cavities 231-234 are respectively bounded by a bottom wall 237 and multiple valve core partition plates 238. The first-second lower cavities valve core cavities 235-236 extend through the valve core body 21 in the axial direction. All of the core cavities 230 are in liquid isolation with one another inside the valve 1.

Further, the axial top side of the valve core body 21 is also provided with a first blind cavity 239 and a second separation chamber 240. The first blind cavity 239 is located between the first upper cavity 231 and the fourth upper cavity 234. The second blind cavity240 is located between the second upper cavity 232 and the third upper cavity 233. The first upper cavity 231, the second upper cavity 232 and the first lower cavity 235 are located on one side of the first and the second blind cavity 239 and 240, while the third upper cavity 233, the fourth upper cavity 234 and the second lower cavity 236 are located on the other side of the first and the second blind cavity 239 and 240.

Specifically, in this embodiment, the first upper cavity 231 is in communication with the first valve core port 211, with the core partition plates 238 bounding the first upper cavity 231 matting with the spokes 222 bounding the first valve core port 211. Similar to the first valve core port 211, the first upper cavity 231 is also substantially sector-annular in shape.

The second upper cavity 232 is in communication with the third valve core port 213 and the fifth valve core port 215, with the corresponding core partition plates 238 bounding the second upper cavity 232 matting with the ribs 222 bounding the third valve core port 213 and the fifth valve core port 215. In this embodiment, the second upper cavity 232 is substantially V-shaped.

The third upper cavity 233 is in communication with the sixth valve core port 216, with the corresponding core partition plates 238 bounding the third upper cavity 233 matting with the ribs 222 bounding the sixth valve core port 216. Similar to the sixth valve core port 216, the third upper cavity 233 is also substantially sector-annular in shape.

The fourth upper cavity 234 is in communication with the eighth valve core port 218 and the tenth valve core port 220, with the corresponding core partition plates 238 bounding the fourth upper cavity 234 matting with the ribs 222 bounding the eighth valve core port 218 and the tenth valve core port 222. In this embodiment, the fourth upper cavity 234 is substantially V-shaped.

The first lower cavity 235 is in communication with the second valve core port 212 and the fourth valve core port 214. the first valve core cavity 235 is substantially U-shapedly in an axial direction and intersects with the second upper cavity 232.

The second lower cavity 236 is in communication with the seventh valve core port 217 and the ninth valve core port 219. The second lower valve cavity 236 substantially U-shapedly in an axial direction and intersects with the fourth upper cavity 234.

The first blind cavity 239 aligns with the third blocking region 223. The second blind cavity 240 aligns with the fourth blocking region 224.

It may be understood that, in other embodiments, the number of the core cavities 230, and the shapes and arrangements of the core cavities 230 may also vary.

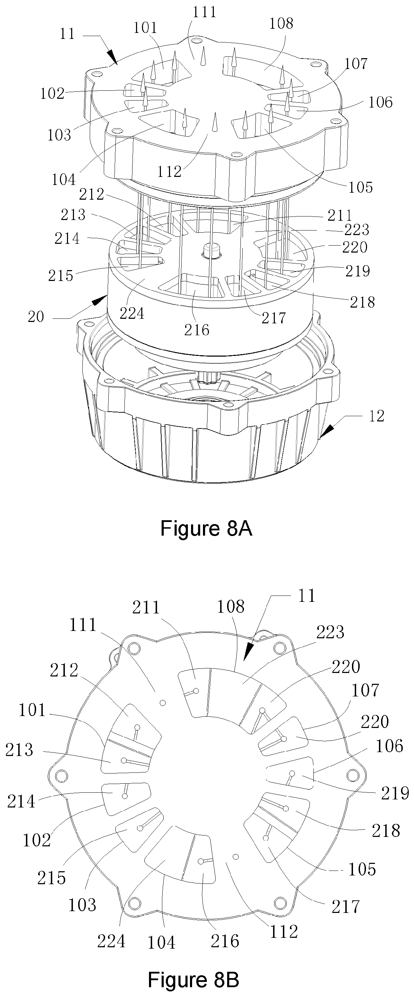

The four operating modes of the multi-port valve 1 of this embodiment will be described below with reference to Fig. 8A to Fig. 11B, in which arrows are used to assist in indicating the fluid flow.

As shown in Fig. 8A and Fig. 8B, in the first operating mode, the second valve housing port 102, which serves as a first input port 102a, and the third valve housing port 103, which may serve as a second input port 103a, are both in communication with the first valve housing port 101, which serve as a first output port 101b.

Specifically, in the first operating mode, the first valve housing port 101 is in communication with both of the second valve core port 212 and the third valve core port 213. The second valve housing port 102 is in communication with the fourth valve core port 214. Since the fourth valve core port 214 is in communication with the second valve core port 212 through the first lower cavity 235, the second valve housing port 102 is in communication with the first valve housing port 101. The third valve housing port 103 is in communication with the fifth valve core port 215. Since the fifth valve core port 215 is in communication with the third valve core port 213 through the second upper cavity 232, the third valve housing port 103 is in communication with the first valve housing port 101.

The fourth valve housing port 104 is in communication with the sixth valve core port 216 and partially aligns with the fourth blocking region 224, at the same time, the second blocking region 112 partially aligns with the sixth valve core port 216. Fluid is blocked from flowing through the fourth valve housing port 104.

The fifth valve housing port 105 is in communication with both of the seventh valve core port 217 and the eighth valve core port 218. The sixth valve housing port 106 is in communication with the ninth valve core port 219. Since the ninth valve core port 219 is in communication with the seventh valve core port 217 through the second lower cavity 236, the sixth valve housing port 106 is in communication with the fifth valve housing port 105. The seventh valve housing port 107 is in communication with the tenth valve core port 220. Since the tenth valve core port 220 is in communication with the eighth valve core port 218 through the fourth upper cavity 234, the seventh valve housing port 107 is in communication with the fifth valve housing port 105.

The eighth valve housing port 108 is in communication with the tenth valve core port 220 and the first valve core port 211, and aligns with the third blocking region 223, at the same time, the first blocking region 111 partially aligns with the first valve core port 211. Since the tenth valve core port 220 is in communication with the eighth valve core port 218 through the fourth upper cavity 234, the eighth valve housing port 108 is in communication with the fifth valve housing port 105.

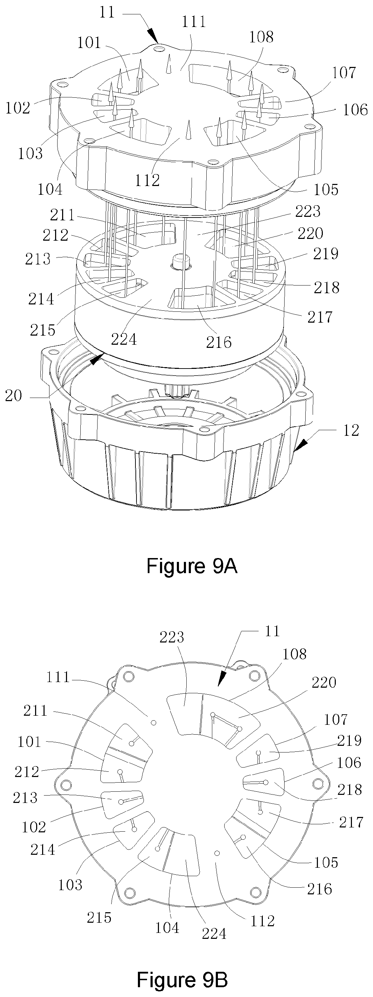

As shown in Fig. 9A and Fig. 9B, when the valve core 20 is rotated counterclockwise by a certain angle relative to the valve housing 10 from the position shown in Fig. 8A and Fig. 8B, the multi-port valve 1 is set at the second operating mode, in which the second valve housing port 102, which serves as the first input port 102a, is in communication with the fourth valve housing port 104, which serves as a second output port 104b, meanwhile, the third valve housing port 103, which serves as the second input port 103a, is in communication with the first valve housing port 101, which serve as the first output port 101b.

Specifically, in the second operating mode, the first valve housing port 101 is in communication with both of the first valve core port 211 and the second valve core port 212, at the same time, the first blocking region 111 partially aligns with the first valve core port 211. The second valve housing port 102 is in communication with the third valve core port 213. The third valve housing port 103 is in communication with the fourth valve core port 214. Since the fourth valve core port 214 is in communication with the second valve core port 212 through the first lower cavity 235, the third valve housing port 103 is in communication with the first valve housing port 101.

The fourth valve housing port 104 is in communication with the fifth valve core port 215 and partially aligns with the fourth blocking region 224. Since the fifth valve core port 215 is in communication with the third valve core port 213 through the second upper cavity 232, the fourth valve housing port 104 is in communication with the second valve housing port 102.

The second blocking region 112 partially aligns with the sixth valve core port 216. The fifth valve housing port 105 is in communication with both of the sixth valve core port 216 and the seventh valve core port 217. The sixth valve housing port 106 is in communication with the eighth valve core port 218. The seventh valve housing port 107 is in communication with the ninth valve core port 219. Since the ninth valve core port 219 is in communication with the seventh valve core port 217 through the second lower cavity 236, the seventh valve housing port 107 is in communication with the fifth valve housing port 105.

The eighth valve housing port 108 is in communication with the tenth valve core port 220 and partially aligns with the third blocking region 223. Since the tenth valve core port 220 is in communication with the eighth valve core port 218 through the fourth upper cavity 234, the eighth valve housing port 108 is in communication with the sixth valve housing port 106.

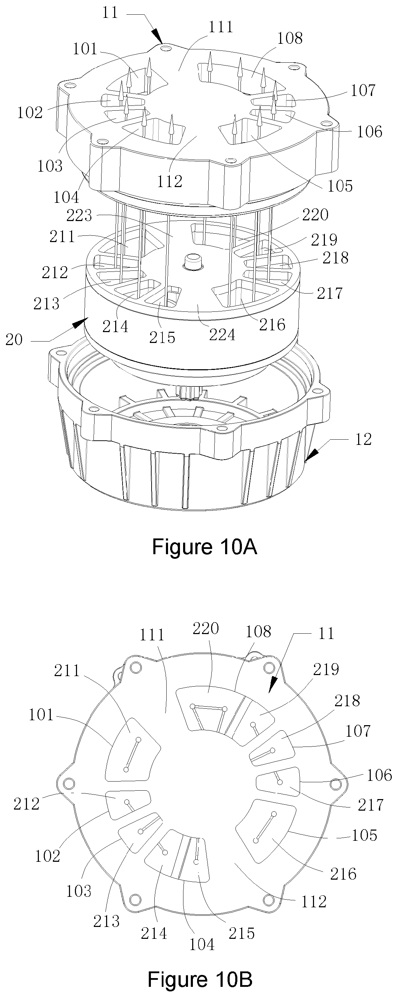

As shown in Fig. 10A and Fig. 10B, when the valve core 20 is further rotated counterclockwise by a certain angle relative to the valve housing 10 from the position shown in Fig. 9A and Fig. 9B, the multi-port valve 1 is set at the third operating mode, in which the second valve housing port 102, which serves as the first input port 102a, and the third valve housing port 103, which serves as the second input port 103a, are both in communication with the fourth valve housing port 104, which serves as the second output port 104b.

Specifically, in the third operating mode, the first valve housing port 101 is only in communication with the first valve core port 211. Thus, fluid is blocked from flowing through the fourth valve housing port 101.

The second valve housing port 102 is in communication with the second valve core port 212. The third valve housing port 103 is in communication with the third valve core port 213. The fourth valve housing port 104 is in communication with both of the fourth valve core port 214 and the fifth valve core port 215. Since the fourth valve core port 214 is in communication with the second valve core port 212 through the first lower cavity 235, the fourth valve housing port 104 is in communication with the second valve housing port 102. Meanwhile, since the fifth valve core port 215 is in communication with the third valve core port 213 through the second upper cavity 232, the fourth valve housing port 104 is also in communication with the third valve housing port 103.

The fifth valve housing port 105 is only in communication with the sixth valve core port 216. Thus, fluid is blocked from flowing through the fourth valve housing port 105.

The sixth valve housing port 106 is in communication with the seventh valve core port 217. The seventh valve housing port 107 is in communication with the eighth valve core port 218. The eighth valve housing port 108 is in communication with both of the ninth valve core port 219 and the tenth valve core port 220. Since the ninth valve core port 219 is in communication with the seventh valve core port 217 through the second lower cavity 236, the eighth valve housing port 108 is in communication with the sixth valve housing port 106. Meanwhile, since the tenth valve core port 220 is in communication with the eighth valve core port 218 through the fourth upper cavity 234, the eighth valve housing port 108 is also in communication with the seventh valve housing port 107.

In the third operating mode, the first blocking region 111 totally aligns with the third blocking region 223, and the second blocking region 112 totally aligns with the fourth blocking region 224.

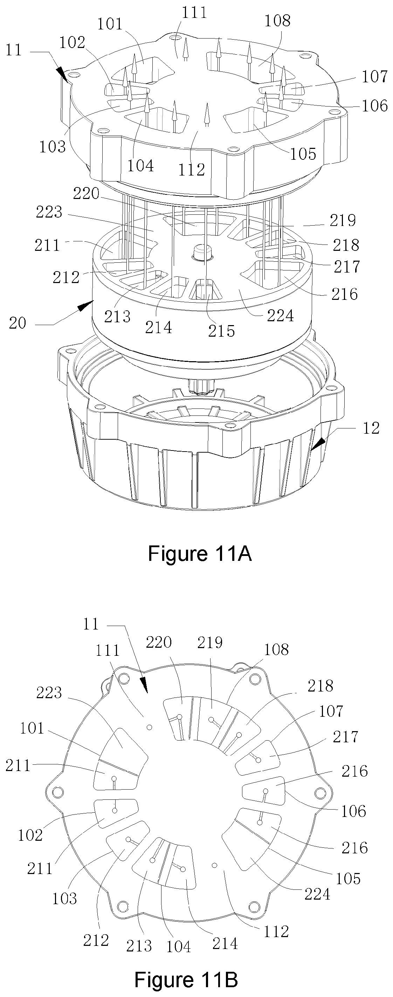

As shown in Fig. 11A and Fig. 11B, when the valve core 20 is further rotated counterclockwise by a certain angle relative to the valve housing 10 from the position shown in Fig. 10A and Fig. 10B, the multi-port valve 1 is set at the fourth operating mode, in which the second valve housing port 102, which serves as the first input port 102a, is in communication with the first valve housing port 101, which serve as the first output port 101b, meanwhile, the third valve housing port 103, which serves as the second input port 103a, is in communication with the fourth valve housing port 104, which serves as a second output port 104b.

Specifically, in the fourth operating mode, the first valve housing port 101 is in communication with the first valve core port 211 and partially aligns with the third blocking region 223, at the same time, the second valve housing port 102 is also in communication with the first valve core port 211. Therefore, the second valve housing port 102 is in communication with the first valve housing port 101.

The third valve housing port 103 is in communication with the second valve core port 212. The fourth valve housing port 104 is in communication with both of the third valve core port 213 and the fourth valve core port 214. Since the fourth valve core port 214 is in communication with the second valve core port 212 through the first lower cavity 235, the fourth valve housing port 104 is in communication with the third valve housing port 103. The second blocking region 112 totally shields the fifth valve core port 215.

The fifth valve housing port 105 patagially aligns with the fourth blocking region 224 and is in communication with the sixth valve core port 216, at the same time, the sixth valve housing port 106 is also in communication with the sixth valve core port 216. Therefore, the sixth valve housing port 106 is in communication with the fifth valve housing port 105.

The seventh valve housing port 107 is in communication with the seventh valve core port 217. The eighth valve housing port 108 is in communication with the eighth valve core port 218, the ninth valve core port 219 and the tenth valve core port 220. Since the ninth valve core port 219 is in communication with the seventh valve core port 217 through the second lower cavity 236, the eighth valve housing port 108 is in communication with the seventh valve housing port 107. The first blocking region 111 aligns with the tenth valve core port 220.

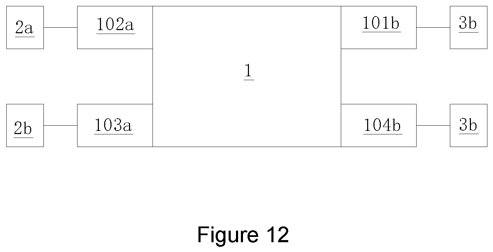

Referring to Fig. 12, a thermal management system, in particular an automotive thermal management system, according to an embodiment of the present invention includes the aforementioned multi-port valve 1, two heat exchangers 2a and 2b, and two thermal management objects 3a and 3b. The two heat exchangers 2a and 2b are respectively in communication with the aforementioned first input port 102a and second input port 103a, and the two thermal management objects 3a and 3b are respectively in communication with the aforementioned first output port 101b and second output port 104b. Optionally, the two heat exchangers 2a and 2b are coolers, and the two thermal management objects 3a and 3b are respectively a battery and a passenger compartment.

By means of the multi-port valve 1 according to the embodiments of the present invention, the thermal management object 3a, namely the battery, may be cooled/heated simultaneously by the two heat exchangers 2a and 2b in the first operating mode; in the second operating mode, the thermal management object 3b, namely the passenger compartment, may be cooled/heated by the heat exchanger 2a, and the thermal management object 3a, namely the battery, may be cooled/heated by the heat exchanger 2b; in the third operating mode, the thermal management object 3b, namely the passenger compartment, may be cooled/heated simultaneously by the two heat exchangers 2a and 2b; and in the fourth operating mode, the thermal management object 3a, namely the battery, may be cooled/heated by the heat exchanger 2a, and the thermal management object 3b, namely the passenger compartment, may be cooled/heated by the heat exchanger 2b. The thermal management system has a simpler structure and lower cost.

The above description merely relates to preferred specific embodiments of the present invention. The protection scope of the present invention is not limited to the embodiments listed above. Any simple variation or equivalent replacement of the technical solution that can be obviously obtained by a person skilled in the art within the technical scope disclosed by the present invention shall fall within the protection scope of the present invention.

## Claims

1. A multi-port valve, comprising:
a valve housing having a plurality of valve housing ports, the plurality of valve housing ports comprising a first valve housing port, a second valve housing port and a third valve housing port; the second valve housing port and the third valve housing port respectively serving as a first input port and a second input port for external fluid flowing into the multi-port valve, the first valve housing port serving as a first output port for the fluid flowing out of the multi-port valve; and
a valve core rotatably received in the valve housing and defining a plurality of flow passages, the flow passages being in fluid isolation from one another inside the valve core;
wherein the first output port are selectively in communication only with one of the first input port and the second input port, or simultaneously in communication with both the first input port and the second input port in response to different operating modes of the multi-port valve by rotating the valve core to different positions relative to the valve housing.

2. The multi-port valve of claim 1, wherein the valve housing further comprises a fourth valve housing port serving as a second output port for the fluid flowing out of the multi-port valve; the plurality of operating modes comprise a first operating mode, a second operating mode, a third operating mode and a fourth operating mode; in the first operating mode, the first input port and the second input port are both in communication with the first output port through one or more of the corresponding flow passages, but fluid is blocked from flowing through the second output port; in the second operating mode, the first input port is in communication with the second output port through one of the flow passages, and the second input port is in communication with the first output port through another one of the corresponding flow passages; in the third operating mode, the first input port and the second input port are both in communication with the second output port through one or more of the flow passages, but fluid is blocked from flowing through the first output port; and in the fourth operating mode, the first input port is in communication with the first output port through one of the corresponding flow passages, and the second input port is in communication with the second output port through another one of the corresponding flow passages.

3. The multi-port valve of claim 2, wherein the valve housing further comprises a fifth valve housing port, a sixth valve housing port, a seventh valve housing port and an eighth valve housing port; in the first operating mode, the fifth valve housing port is in communication with the sixth valve housing port, the seventh valve housing port and the eighth valve housing port, through one or more of the flow passages; in the second operating mode, the fifth valve housing port is in communication with the seventh valve housing port through one of the flow passages, and the sixth valve housing port is in communication with the eighth valve housing port through another one of the flow passages; in the third operating mode, the fluid is blocked from flowing through the fifth valve housing port, the sixth valve housing port and the seventh valve housing port are both in communication with the eighth valve housing port through one or more of the flow passages; and in the fourth operating mode, the fifth valve housing port is in communication with the sixth valve housing port through one of the flow passages, the seventh valve housing port is in communication with the eighth valve housing port through another one of the flow passage.

4. The multi-port valve of claim 3, wherein the valve housing ports are defined in an axial end face of the valve housing and are distributed at intervals in a circumferential direction; each of the valve housing ports is substantially sector-annular in shape; span angles of the second valve housing port, the third valve housing port, the sixth valve housing port and the seventh valve housing port are equal; each of span angles of the first valve housing port, the fourth valve housing port, the fifth valve housing port and the eighth valve housing port is an integral multiple of the span angle of the second valve housing port.

5. The multi-port valve of any one of claims 2 to 4, wherein each of the flow passages comprises one of multiple core cavities and one of multiple valve core ports communicating with said one core cavity; the valve core ports are defined in an axial end face of the valve core and are distributed at intervals in the circumferential direction, each of the valve core ports is substantially sector-annular in shape; the valve core ports can be alternatively aligned with and communicate with the valve core ports by switching among the operating modes to enable the flow passages to be selectively in communication with the valve housing ports; each of span angles of the valve core port is an integral multiple of the span angle of the second valve housing port.

6. The multi-port valve of claim 5, wherein two of the valve core ports circumferentially adjacent to each other respectively belong to two of the flow passages; in at least one of the operating modes, a valve core port with the span angle greater than the span angle of the second valve housing port are simultaneously aligned with and in communication with two of the valve housing ports.

7. The multi-port valve of claim 5, wherein one of the core cavities of one of the flow passages overlaps, in the axial direction, with the core cavities of one or more other flow passages.

8. The multi-port valve of claim 7, wherein the valve core comprises a valve core body, and a top plate and a bottom plate respectively covering two axial ends of the valve core body; the valve core ports are defined in the top plate, the core cavities of the flow passages are formed in the valve core body; the core cavities comprise upper cavities closed to an axial top side of the valve core bod, and lower cavities closed to an axial bottom side of the valve core body; the lower cavities overlap, in the axial direction, with one or more of the upper cavities.

9. A thermal management system, wherein the thermal management system comprises the multi-port valve of claim 2.

10. The thermal management system according to claim 9, wherein the thermal management system further comprises two heat exchangers and two thermal management objects; the two heat exchangers are respectively in communication with the first input port and the second input port, and the two thermal management objects are respectively in communication with the first output port and the second output port.

11. The thermal management system according to claim 10, wherein the two thermal management objects comprise a battery and a passenger compartment.
